Europäisches Patentamt

European Patent Office

Office européen des brevets

(19)

(11)  EP 1 471 436 A1

(12)  **EUROPEAN PATENT APPLICATION**

(43) Date of publication:
**27.10.2004  Bulletin 2004/44**

(51) Int Cl.$^7$: **G06F 17/10**, G06N 7/00

(21) Application number: **03076173.8**

(22) Date of filing: **22.04.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **STICHTING VOOR DE TECHNISCHE
WETENSCHAPPEN
3527 JP Utrecht (NL)**

(72) Inventors:
• **Leisink, Martijn A.R.
6845 GB Arnhem (NL)**
• **Kappen, Hilbert Johan
6532 SJ Nijmegen (NL)**

(74) Representative: **Jorritsma, Ruurd et al
Nederlandsch Octrooibureau
Postbus 29720
2502 LS Den Haag (NL)**

(54)  **Method and system for bound propagation**

(57)   Method for determining a marginal probability for an observed phenomenon in a probabilistic network which describes probabilities for relationships between the phenomenon and physical parameters by using a bound propagation method with an upper bound and a lower bound, wherein the calculation of the upper bound and the lower bound is performed by an iterative linear programming formalism, with the calculation being consecutively repeated while varying a choice for the determinable marginal subset from the plurality of marginal subsets until a convergence criterion is fulfilled.

*Fig 7*

EP 1 471 436 A1

**Description**

Field of the invention

The present invention relates to a method and system for determining a marginal probability in a probabilistic network by bound propagation as defined in the preamble of claim 1 and claim 5, respectively.

Background of the invention

In the physical world, an observed pattern of physical parameters may contain evidence about the state of the underlying physical system. However, the exact relationship between such an observed phenomenon and the governing physical parameters may be practically unknown or difficult to determine. It is noted that in many occasions not all parameters relating to an observation are known i.e., they may be hidden or latent, and that the relationship can be probabilistic in stead of deterministic.

Examples of such phenomena may be the relation of e.g., a physical condition of a biological system in relation to information contained in its genes, a weather forecast in relation to meteorological parameters, or the relationship between a flooding and environmental conditions.

Inference relates to the determination or computation of probabilities for the relationship between the given evidence and the governing physical parameters by using a probability model.

Due to the often complex nature of the relationships illustrated above, this probability model may take the form of a Bayesian graphical model (or probability network). Inference is the basic operation in almost any Bayesian method. It is in general intractable, which means that the computation time and memory allocation scale exponentially with the problem size. In such cases one can either compute an approximation of the marginal probability or compute upper and lower bounds on the marginal probability.

It is noted that in this respect probabilistic networks play an important role in the field of artificial intelligence (AI) for extracting information from an artificially intelligent application. The value of such information strongly relates to a probability attached to that information. Within AI, large inference problems occur in e.g., expert systems (medical or otherwise), pattern recognition systems, vision systems, speech recognition systems and robotics.

The purpose of computing an interval which bounds the quantity of interest is that one knows for certain, that the value of that quantity is within the interval. Depending on the size of the interval one can infer whether this gives a reliable estimate or not. In contrast, approximate inference produces only an estimate, whose reliability cannot be inferred.

Some research has been done on computing bounds for the partition function (the normalisation constant) of a probability distribution. This started with the well-known mean field lower bound as described by C. Peterson and J. Anderson in: "*A mean field theory learning algorithm for neural networks*", Complex systems, 1:995-1019, 1987 and by Lawrence Saul, Tommi Jaakkola, and Michael Jordan in: "*Mean field theory for sigmoid belief networks*", Journal of Artificial Intelligence Research, 4:61-76, 1996, but this description was extended more recently to higher order bounds by Martijn A.R. Leisink and Hilbert J. Kappen in: "*A tighter bound for graphical models*", Neural Computation, 13(9):2149-2170, 2001 and by Martijn A.R. Leisink and Hilbert J. Kappen in *"General lower bounds based on computer generated higher order expansions",* Uncertainty in Artificial Intelligence, pages 293-300, 2002.

Less research has been done for bounding the partition function from above. For a certain class of probabilistic networks this was done by Tommi S. Jaakkola and Michael I. Jordan in: *"Computing upper and lower bounds on likelihoods in intractable networks",* Proceedings of the Twelfth Annual Conference on Uncertainty in Artificial Intelligence (UAI-96), pages 340-348, San Francisco, CA, 1996. Morgan Kaufmann Publishers and in a more general manner by Martin Wainwright, Tommi Jaakkola, and Alan Willsky, in: *"A new class of upper bounds on the log partition function",* Uncertainty in Artificial Intelligence, volume 18, 2002.

It is possible to combine these upper and lower bounds on the partition function to derive upper and lower bounds on the marginal probability values. For Boltzmann machines this was done by Martijn A.R. Leisink and Hilbert J. Kappen in: "Means, correlations and bounds", Advances in Neural Information Processing Systems 14, 2002. It is noted that this procedure can be applied in a more general manner. Although the objective of this method is the same as for Bound Propagation (i.e. to compute numerical intervals that bound the marginal probability of interest), the algorithms are completely different.

The Bound Propagation algorithm makes use of linear programming as described by Michael Todd in: *"The many facets of linear programming",* Mathematical Programming, 91:417-436, 2002. This technique relates to a very general mathematical method for function minimisation and maximisation. To the knowledge of the inventors there has been no earlier attempt to use this tool in an algorithm for bounding marginal probabilities. Existing algorithms all try to bound the partition function of a network either from above or below. Since such a function depends on the entire probability network, this approach has the clear disadvantage that one can not compute only interesting parts of the probability network. In a worst case, only a small part of the entire probability network may be intractable for the bounding algorithm, which has the adverse consequence that computation of any useful information fails altogether.

Summary of the invention

It is an object of the present invention to provide an method for determining a marginal probability in a probabilistic network by bound propagation which improves on the methods of computing bounds for the partition function of a probability distribution from the prior art as described above and provides a more efficient method for calculations to formerly intractable inference problems.

The present invention relates to a method as defined in the preamble of claim 1, characterised in that the calculation of the upper bound and the lower bound is performed by an iterative linear programming formalism, the calculation being consecutively repeated while varying a choice for the determinable marginal subset from the plurality of marginal subsets until a convergence criterion is fulfilled.

The method for determining a marginal probability in a probabilistic network by bound propagation according to the present invention provides for a bound propagation algorithm which is a "local method". That is, computations are done on (many) small parts and do not depend on the rest of the network. Especially for inhomogeneous networks the method for Bound Propagation is superior in computation time and accuracy in comparison with methods from the prior art. The method is efficient for computing bounds on marginal probabilities. For each marginal probability value a minimum and a maximum value is found for which it is guaranteed that the exact value lies in between these two values. Moreover, the present invention relates to a computer system as defined in the preamble of claim 5, characterised in that the processing unit is arranged for calculating the upper bound and the lower bound by an iterative linear programming formalism, the calculation being consecutively repeated while varying a choice for the determinable marginal subset from the plurality of marginal subsets until a convergence criterion is fulfilled. Furthermore, the present invention relates to a computer program product to be loaded by the system as described above, characterised in that the computer program product after being loaded allows the processing unit to carry out:

calculation of the upper bound and the lower bound by an iterative linear programming formalism, the calculation being consecutively repeated while varying a choice for the determinable marginal subset from the plurality of marginal subsets until a convergence criterion is fulfilled.

Finally, the present invention relates to a data carrier with a computer program product as described above.

Brief description of drawings

For the purpose of teaching of the invention, preferred embodiments of the method and devices of the invention are described below. It will be appreciated by the person skilled in the art that other alternative and equivalent embodiments of the invention can be conceived and reduced to practice without departing form the true spirit of the invention, the scope of the invention being limited only by the appended claims.

Figure 1 shows a diagram of a first example of separator and marginal nodes in an (infinite) Ising grid with a single node enclosed by its tightest separator;
Figure 2 shows a diagram of a second example of separator and marginal nodes in an (infinite) Ising grid with two marginal nodes enclosed by their tightest separator;
Figure 3 shows a diagram of a third example of separator and marginal nodes in an (infinite) Ising grid with two marginal nodes enclosed by their tightest separator;
Figure 4 shows a diagram of a fourth example of separator and marginal nodes in an (infinite) Ising grid with a marginal node enclosed by a separator, which is not the tightest and a second node also enclosed by the separator, but not a marginal node, belonging to $S_{oth}$;
Figure 5 shows schematically a computer arrangement as used in the system according to the present invention;
Figure 6 shows a diagram of a parameter space for a distribution $q(s_1 s_2)$ with free parameters $s_1$, $s_2$;
Figure 7 shows a diagram of the parameter space for a distribution $q(s_1 s_2)$ with free parameters $s_1$, $s_2$ under constraints set forth by the method according to the present invention.

Detailed description of preferred embodiment

The present invention relates to a method for Bound Propagation which provides an efficient approach for determining a value of a parameter in a probability model. In this respect, bounds are minimum and maximum values for each entry in the marginal probability table of one or more nodes of a probabilistic network. Further, a separator of a set of nodes of the probability network is defined as a collection of nodes that separate the set of nodes from the rest of the network.

In relation to the present invention the following is considered: in a probability network a Markov network is defined by the potentials $\psi(S_i)$, with $S_i$ being a subset of variables. The probability $p(S)$ to find the network in a certain state $S = U_i S_i$ is proportional to:

$$p(S) \propto \prod_i \psi_i(S_i) \qquad (1)$$

Problems arise when one is interested in the marginal probability over a small number (i.e., a subset) of nodes (denoted by $S_{mar}$), since in general the computation of this marginal probability requires the summation over all of the many states, which number may be exponentially large.

A set of separator nodes, $S_{sep}$, is defined as the nodes that separate at least $S_{mar}$ from the rest of the network. One can take, for instance, the union of the nodes in all potentials that contain at least one node in $S_{mar}$, while excluding the marginal nodes themselves in that union (which is the Markov blanket of $S_{mar}$):

$$S_{sep} = \bigcup_{S_i \cap S_{mar} \neq 0} S_i \ / S_{mar} \qquad (2)$$

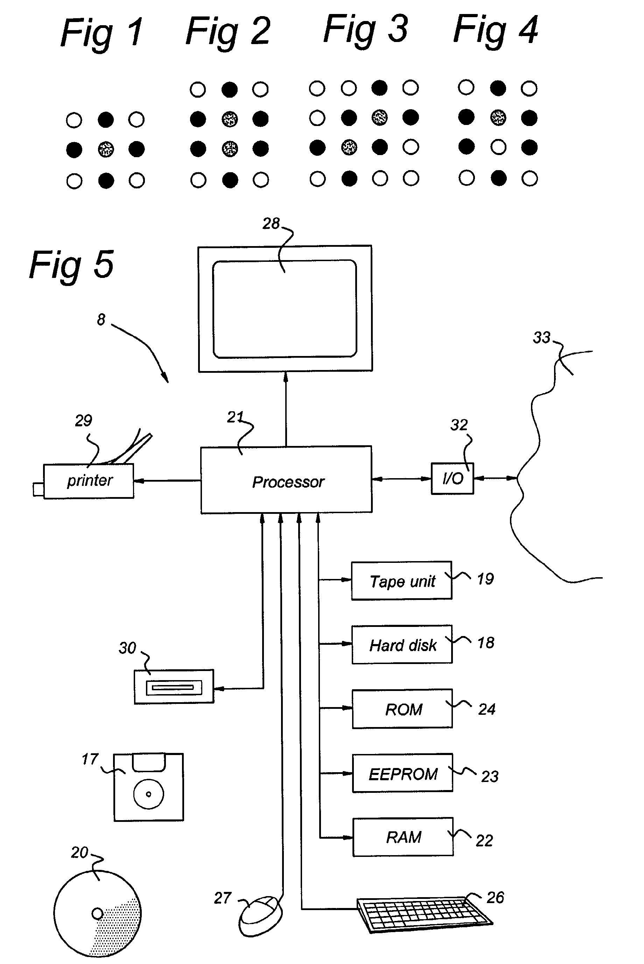

This is illustrated in Figures 1, 2, 3 and 4, each of which displays examples of marginal and separator nodes in a probabilistic network. The network is represented here by an (infinite) Ising grid.

Figure 1 shows a diagram of a first example of separator and marginal nodes in an (infinite) Ising grid with a single node enclosed by its tightest separator. In Figure 1, light shaded nodes correspond to $S_{mar}$, black nodes to $S_{sep}$.

Figure 2 shows a diagram of a second example of separator and marginal nodes in an (infinite) Ising grid with two marginal nodes enclosed by their tightest separator.

Figure 3 shows a diagram of a third example of separator and marginal nodes in an (infinite) Ising grid with two marginal nodes enclosed by their tightest separator.

There can be a small number of other nodes, $S_{oth}$, (i.e., another subset) inside the separated area, but not included in $S_{mar}$ as shown in Figure 4.

Figure 4 shows a diagram of a fourth example of separator and marginal nodes in an (infinite) Ising grid with a marginal node enclosed by a separator, which is not the tightest and a second node also enclosed by the separator, but not a marginal node, belonging to $S_{oth}$.

Basically, it is not necessary, however, that $S_{sep}$ defines a tight separation.

If a particular setting of the state of the separator nodes, $\vec{s}_{sep}$, is defined, then computing the marginal is done according to eq. 3:

$$p(\vec{s}_{mar} \mid \vec{s}_{sep}) = \sum_{\vec{s}_{oth} \in S_{oth}} p(\vec{s}_{mar}\vec{s}_{oth} \mid \vec{s}_{sep}) \qquad (3)$$

and similarly, if we know the exact distribution over the separator nodes, computing the marginal is done according to eq. 4:

$$p(\vec{s}_{mar}) = \sum_{\vec{s}_{sep} \in S_{sep}} \sum_{\vec{s}_{oth} \in S_{oth}} p(\vec{s}_{mar}\vec{s}_{oth} \mid \vec{s}_{sep}) p(\vec{s}_{sep}) \qquad (4)$$

Unfortunately, in general the distribution $p(\vec{s}_{sep})$ is not known and therefore $p(\vec{s}_{mar})$ can not be computed.

However, still certain properties of the marginal distribution can be derived, namely upper and lower bounds for each state of $S_{mar}$. For instance, an upper bound $p_+(\vec{s}_{mar})$ on a particular state $\vec{s}_{mar}$ can easily be found by computing:

$$p_+(\vec{s}_{mar}) = \max_{q(\vec{s}_{sep})} \sum_{\vec{s}_{oth} \in S_{oth}} p(\vec{s}_{mar}\vec{s}_{oth} \mid \vec{s}_{sep})q(\vec{s}_{sep}) \qquad (5)$$

under the constraints:

$$\forall_{\vec{s}_{sep}} \in s_{sep} \quad q(\vec{s}_{sep}) \geq 0 \qquad (6)$$

and

$$\sum_{\vec{s}_{sep} \in s_{sep}} q(\vec{s}_{sep}) = 1 \qquad (7)$$

The distribution $q(\vec{s}_{sep})$ corresponds to $\|S_{sep}\|$ free parameters (under the given constraints of eq. 6 and 7) for computing a worst case (here: the maximum) marginal value for each $\vec{s}_{mar}$. If $q(\vec{s}_{sep}) = p(\vec{s}_{sep})$ the upper bound corresponds to the exact value, but in general $p(\vec{s}_{sep})$ is unknown and the function

$$\sum_{\vec{s}_{oth} \in S_{oth}} p(\vec{s}_{mar}\vec{s}_{oth} \mid \vec{s}_{sep})q(\vec{s}_{sep})$$

as shown in eq. 5 must be maximised over all possible distributions. Eq. 5 can be regarded as a linear programming (LP) formalism with $\|S_{sep}\|$ variables. With a similar equation lower bounds $p_-(\vec{s}_{mar})$ can be found:

$$p_-(\vec{s}_{mar}) = \min_{q(\vec{s}_{sep})} \sum_{\vec{s}_{oth} \in S_{oth}} p(\vec{s}_{mar}\vec{s}_{oth} \mid \vec{s}_{sep}) \, q(\vec{s}_{sep}) \qquad (8)$$

Up to now no information about $q(\vec{s}_{sep})$ that might be available is put into eq. 5 (or eq. 8) above. In the present invention, it is assumed that already upper and lower bounds on the marginals of other nodes than $S_{mar}$ are computed. In case this is not true, one takes the trivial bound that a marginal should be between zero and one. This knowledge can be utilised in the following way: a table comprising all sets of marginal nodes that were bounded earlier, is to be investigated and those sets of marginal nodes that are subsets of $S_{sep}$ are extracted as extracted subsets. For a subset, the symbol $S'_{mar}$ will be used to indicate an earlier computed bound over $S'_{mar}$ with $S'_{mar} \subseteq S_{sep}$.

Obviously, whenever already computed bounds on $S'_{mar}$ where $S'_{mar} \subseteq S_{sep}$ are found, it can be guaranteed that

$$\forall_{\vec{s}'_{mar}} \quad \sum_{\vec{s}_{sep} \in S_{sep}/S'_{mar}} q(\vec{s}_{sep}) = q(\vec{s}'_{mar}) < p_+(\vec{s}'_{mar}) \qquad (9)$$

and similarly for the lower bound. These equations are simply extra constraints on $q(\vec{s}_{sep})$ which may be include in the LP-problem in Eq. 5 (or Eq. 8). There can be several subsets $S'_{mar}$ that are subsets of $S_{sep}$ each of which defining $2\times \|S'_{mar}\|$ extra constraints.

In this way, information collected by earlier computed bounds, can propagate to $S_{mar}$, thereby finding tighter bounds for these marginals. This process can be repeated for all extracted sets of marginal nodes until convergence is reached.

The method for determining a marginal probability in a probabilistic network by bound propagation according to the present invention can be implemented in a procedure for bound propagation computations by a computer system.

Figure 5 shows schematically a computer arrangement 8 as used for the method according to the present invention.

Computer arrangement 8 comprises host processor 21 with peripherals. The host processor 21 is connected to memory units 18, 19, 22, 23, 24 which store instructions and data, one or more reading units 30 (to read, e.g., floppy disks 17, CD ROM's 20, DVD's, etc.), a keyboard 26 and a mouse 27 as input devices, and as output devices, a monitor 28 and a printer 29. Other input devices, like a trackball, a touch screen or a scanner, as well as other output devices may be provided.

Further, a network I/O device 32 is provided for a connection to a network 33.

The memory units shown comprise RAM 22, (E)EPROM 23, ROM 24, tape unit 19, and hard disk 18. However, it should be understood that there may be provided more and/or other memory units known to persons skilled in the art. Moreover, one or more of them may be physically located remote from the processor 21, if required.

The processor 21 is shown as one box, however, it may comprise several processing units functioning in parallel or controlled by one main processor, that may be located remotely from one another, as is known to persons skilled in the art.

The processor 21 of computer arrangement 8 is capable of executing software code that implements the bound propagation method according to the present invention.

In terms of standard linear programming, Eq. 5 can be expressed as

$$\max\{\vec{c}\cdot\vec{x}\,|\,\vec{x}\geq 0 \wedge A\vec{x}\leq\vec{b}\} \tag{10}$$

where the variables are defined as

$$\vec{x} = q(\vec{s}_{sep}) \tag{11}$$

$$\vec{c} = p(\vec{s}_{mar}|\vec{s}_{sep}) \tag{12}$$

It is noted that $p(\vec{s}_{mar}|\vec{s}_{sep})$ can be calculated as

$$p(\vec{s}_{mar} \mid \vec{s}_{sep}) = \sum_{\vec{s}_{oth}\in S_{oth}} p(\vec{s}_{mar}\vec{s}_{oth} \mid \vec{s}_{mar}) \,,$$

but $p(\vec{s}_{mar}|\vec{s}_{sep})$ may be calculated in any other suitable way, for example by a junction tree algorithm.

$$A,\vec{b} = \begin{cases} \delta(\vec{s}'_{mar},\vec{s}_{sep}), p_+(\vec{s}'_{mar}) \\ -\delta(\vec{s}'_{mar},\vec{s}_{sep}), -p_-(\vec{s}'_{mar}) \end{cases} \quad (\forall S'_{mar} \subseteq S_{sep} \, \forall \vec{s}'_{mar} \in S'_{mar}) \quad (13)$$

where Kronecker symbol $\delta(\vec{s}'_{mar},\vec{s}_{sep}) = 1$ if the states of the nodes that both node sets have in common are equal.

The columns of the matrix $A$ are thus indexed by $\vec{s}_{sep}$, the rows of $A$ and $\vec{b}$ correspond to all the constraints (of which exist $2\times\|S'_{mar}\|$ for each $S'_{mar} \subseteq S_{sep}$). The constraint that $q(\vec{s}_{sep})$ should be normalised can be incorporated in $A$ and $\vec{b}$ by requiring

$$\sum_{\vec{s}_{sep}} q(\vec{s}_{sep}) \leq 1 \tag{14}$$

and

$$- \sum_{\vec{s}_{sep}} q(\vec{s}_{sep}) \leq -1 \qquad\qquad (15)$$

The maximum of $\vec{c} \cdot \vec{x}$ corresponds to $p_+(\vec{s}_{mar})$. The negative of $p_-(\vec{s}_{mar})$ can be found by using $-\vec{c} \cdot \vec{x}$ as the objective function.

To summarise, exemplary pseudocode to illustrate the above mentioned method for bound propagation is listed here:

1. Define a plurality of sets of marginal nodes $S_{mar}^k$ with corresponding separators $S_{sep}$, and sets $S_{oth}$ (of nodes not within $S_{mar}^k$, but enclosed by $S_{mar}^k$), with k as index. (As persons skilled in the art will appreciate, the details on the definition of the sets may vary with the problem under investigation.)

2. Initialise upper bounds $p_+(S_{mar}^k)$ and lower bounds $p_-(S_{mar}^k)$ for each k with each upper bound as 1 and each lower bound as 0.

3. Select a set $S_{mar}$ from $S_{mar}^k$, for which set $S_{mar}$ upper and lower bounds are to be computed.

4. Set up a linear programming schedule as shown in equation 10, with the free variables given by the distribution $q(S_{sep})$.

For each of the sets defined in step 1, determine which sets have all its marginal nodes completely within $S_{sep}$, and define an index k over these sets.

For each k define two constraints (i.e. $p_-(\vec{s}_{mar}^{'k}) \leq q(\vec{s}_{mar}^{'k}) \leq p_-(\vec{s}_{mar}^{'k})$) for each $\vec{s}_{mar}^{'k} \in S_{mar}^{'k}$. Each constraint is included in matrix A and vector $\vec{b}$ (of eq. 13).

For each state $\vec{s}_{mar} \in S_{mar}^k$ vector $\vec{c}$ (of eq. 13) is set equal to

$$p(\vec{s}_{mar} \in S_{mar}^k | \vec{s}_{sep} \in S_{sep}^k) \qquad\qquad \text{(eq. 12)}.$$

Solve the linear programming set $A$, $\vec{b}$, $\vec{c}$ for minimisation and maximisation to obtain new values for $p_-(S_{mar}^k)$ and $p_+(S_{mar}^k)$, respectively.

Determine the convergence of the calculations. Until a convergence criterion is fulfilled, return to step 3.

Large inference problems occur in many contexts (robotics signal processing, AI methods, speech recognition, vision, etc.). In the following of this specification, a further example of applying the bound propagation method according to the present invention is discussed.

Imagine a single node, $s_0$, that is separated from the rest of the network by two other nodes, $s_1$ and $s_2$. All three nodes are binary valued. Bounds on the marginal $p(s_0 = 1)$ need to be computed. Since the distribution over the separator nodes $S_{mar}$ is not known, all possible distributions as in Equation 5 have to be considered. For this purpose, four free parameters $q(s_1 s_2)$ are introduced: one for each possible state of $s_1$ and $s_2$. These free parameters correspond to the unknown true distribution $p(s_1 s_2)$.

According to the bound propagation computation of the present invention, the goal is now to compute the minimum and maximum of the function

$$\sum_{s_1, s_2} p(s_0 = 1 \mid s_1 s_2) \, q(s_1 s_2).$$

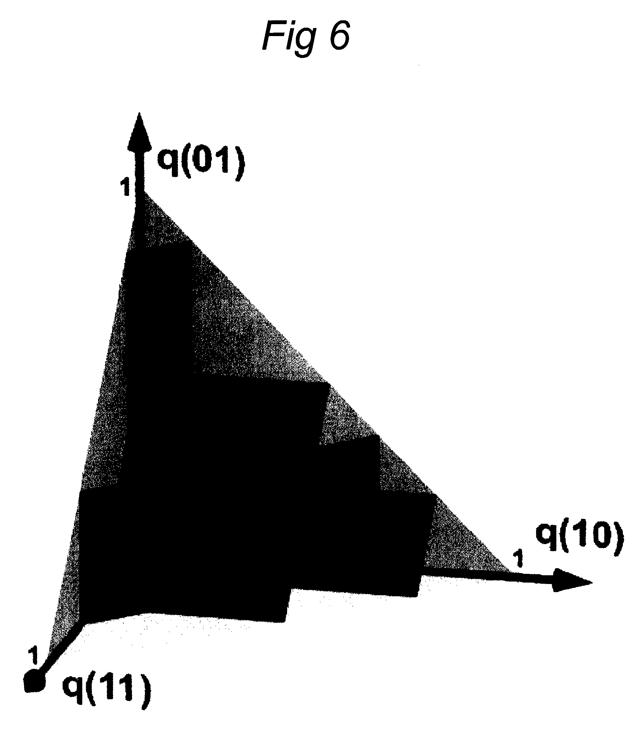

Figure 6 shows a diagram of a parameter space for an exemplary distribution $q(s_1 s_2)$ with free parameters $s_1$, $s_2$.

The parameter space extends in three dimensions (depicted by a large pyramid) in which the distribution for free parameter $q(s_1 s_2)$ lies. Free parameter $q(0\ 0)$ is implicitly given, since $q(0\ 0) + q(0\ 1) + q(1\ 0) + q(11) = 1$ (see equation 7).

However, the earlier computed (single node) bounds on $p(s_1)$ and $p(s_2)$ are added for narrowing the range of the problem. These earlier computed (single node) bounds on $p(s_1)$ and $p(s_2)$ restrict the solution space in Figure 6 further, since for instance (see also Eq. 8)

$$q(s_1 = 1) = \sum_{s_2} q(s_1 = 1, s_2) = q(10) + q(11) \le p_+(s_1 = 1) \qquad (14)$$

Four independent constraints now exist, which are depicted in Figure 6 as planes in the pyramid. These correspond to $p_-(s_1) \le q(s_1) \le p_+(s_1)$ and $p_-(s_2) \le q(s_2) \le p_+(s_2)$, where $q(s_1)$ and $q(s_2)$ are the marginals of the distribution $q(s_1 s_2)$ over $s_1$ and $s_2$, respectively.

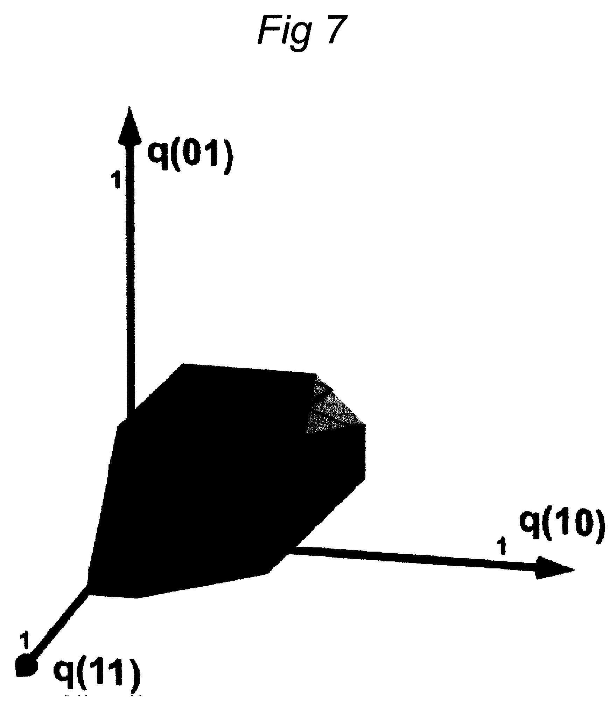

Figure 7 shows a diagram of the parameter space for an exemplary distribution $q(s_1 s_2)$ with free parameters $s_1$, $s_2$ under constraints set forth by the method according to the present invention. By adding this information the space in which $q(s_1 s_2)$ may lie is restricted to that shown in Figure 7. In the same figure 7 black lines are shown, that correspond to the planes where the objective function

$$\sum_{s_1, s_2} p(s_0 = 1 \mid s_1 s_2) q(s_1 s_2)$$

is constant.

A standard linear programming tool will immediately return the maximum and the minimum of this function thus bounding the marginal $p(s_0 = 1)$. Analogously, the solution space for $p(s_0 = 0)$ can be obtained.

**Claims**

1. Method for determining a marginal probability for an observed phenomenon in a probabilistic network which describes probabilities for relationships between said phenomenon and physical parameters by using a bound propagation method,
said model comprising a set ($S$) of variables ($s_i$),
said variables ($s_i$) representing observations of said physical parameters,
said set ($S$) of variables comprising a plurality of subsets ($S_i$), each of said plurality of subsets ($S_i$) having a plurality of states ($\vec{s}_i$);
said probability model being defined by a probability distribution,
said probability distribution having a potential ($\psi(S_i)$) for each of said subsets;
said set ($S$) of variables further comprising a plurality of marginal subsets ($S_{mar}^{'j}$), each of said plurality of marginal subsets ($S_{mar}^{'j}$) having a plurality of states ($\vec{s}_j$);
said method comprising:

- defining one of said marginal subsets $S_{mar}^{'j}$ as a determinable marginal subset ($S_{mar}$) for which upper and lower bounds are to be determined;
- defining a separator subset ($S_{sep}$) which comprises variables that separate at least said determinable marginal subset ($S_{mar}$) from a remainder set of variables in said set ($S$), said separator subset ($S_{sep}$) further separating another subset ($S_{oth}$),

wherein said other set ($S_{oth}$) comprises variables separated from said remainder set of variables in set ($S$), without elements of subset ($S_{oth}$) being elements of said determinable marginal subset ($S_{mar}$) or of said separator subset ($S_{sep}$), or said other subset ($S_{oth}$) is an empty subset, and said remainder set holds said set ($S$) under exclusion of said separator subset ($S_{sep}$), said determinable marginal subset ($S_{mar}$) and said other subset ($S_{oth}$);

- determining for said plurality of marginal subsets $S_{mar}^{'j}$, which of said subsets $S_{mar}^{'j}$ has its marginal nodes fully encompassed within said separator subset ($S_{sep}$) as being enclosed subsets ($S_{mar}^{'k}$), with $k$ being an index over said enclosed subsets ($S_{mar}^{'k}$);
- calculating an upper bound ($p_+(S_{mar})$) for said marginal probability of said determinable marginal subset ($S_{mar}$), and calculating a lower bound ($p_-(S_{mar})$) for said marginal probability of said determinable marginal subset ($S_{mar}$);

**characterised in that**
said calculation of said upper bound ($p_+(S_{mar})$) and said lower bound ($p_-(S_{mar})$) is performed by an iterative linear programming formalism, said calculation being consecutively repeated while varying a choice for said determinable marginal subset ($S_{mar}$) from said plurality of marginal subsets $S_{mar}^{'j}$ until a convergence criterion is fulfilled.

2. Method according to claim 1, **characterised in that**
   said calculation comprises:

   - setting up a linear programming formalism according to:

   $$\max\{\vec{c}\cdot\vec{x} \mid \vec{x} \geq 0 \wedge A\vec{x} < \vec{b}\}$$

   with: $\vec{x} = q(\vec{s}_{sep})$,

   $$\vec{c} = p(\vec{s}_{mar} \mid \vec{s}_{sep}) \text{ and}$$

   $$A, \vec{b} = \begin{cases} \delta(\vec{s}_{mar}^{'k}, \vec{s}_{sep}), p_+(\vec{s}_{mar}^{'k}) \\ -\delta(\vec{s}_{mar}^{'k}, \vec{s}_{sep}), -p_-(\vec{s}_{mar}^{'k}) \end{cases} \quad (\forall S_{mar}^{'k} \subseteq S_{sep}, \forall \vec{s}_{mar}^{'k} \in S_{mar}^{'k})$$

   where $\delta(\vec{s}_{mar}^{'k}, \vec{s}_{sep}) = 1$ if the states of the nodes that $S_{mar}^{'k}$ and $S_{sep}$ have in common are equal, and

   wherein $q(\vec{s}_{sep})$ is defined as a distribution defining free variables in said linear programming formalism, with p+($S_{mar}^{'k}$) and p_($S_{mar}^{'k}$) either indicating earlier computed bounds over $S_{mar}^k$ with $S_{mar}^{'k} \subseteq S_{sep}$ or either $p_+(S_{mar}^{'k})$ being one or $p_-(S_{mar}^{'k})$ being zero, if no earlier computed bounds exist for said $S_{mar}^{'k}$ ;

   - defining for each state ($\vec{s}_{mar}^{'}$) of $S_{mar}^{'k}$ :

     • a first constraint

     $$p_-(\vec{s}_{mar}^{'k}) \leq q(\vec{s}_{mar}^{'k}) \text{ with } \forall_{\vec{s}_{mar}^{'k}} \quad q(\vec{s}_{mar}^{'k}) = \sum_{\vec{s}_{sep} \in S_{sep}/S_{mar}^{'k}} q(\vec{s}_{sep})$$

     and
     a second constraint $q(\vec{s}_{mar}^{'k}) \leq p_+(\vec{s}_{mar}^{'k})$ ;

   - substituting said first and said second constraint in matrix $A$ and vector $\vec{b}$ ;

     • setting vector $\vec{c}$ equal to $p(\vec{s}_{mar} \in S_{mar}^k \mid \vec{s}_{sep} \in S_{sep}^k)$ for each state $\vec{s}_{mar} \in S_{mar}$;
     • solving the linear programming set $A, \vec{b}, \vec{c}$ for minimisation and maximisation to obtain new values for $p_-$($S_{mar}$) and $p_+(S_{mar})$, respectively, for each $\vec{s}mar \in S_{mar}$.

3. Method according to any of the preceding claims, **characterised in that** said method relates to calculation of probabilities in medical diagnosis.

4. Method according to any of the preceding claims, **characterised in that** said method relates to calculation of probabilities in one of an artificial intelligence method, robotics signal processing, speech recognition, vision, and pattern recognition.

5. System (8) for computing at least one marginal probability for an observed phenomenon in a probability model which describes probabilities for relationships between said phenomenon and physical parameters, the system being arranged to perform the method according to claim 1, comprising a processing unit (21) and memory (18, 19, 22, 23, 24), said memory being connected to said processing unit (21), **characterised in that** said processing unit (21) is arranged for calculating said upper bound ($p_+(S_{mar})$) and said lower bound ($p_-(S_{mar})$) by an iterative linear programming formalism, said calculation being consecutively repeated while varying a choice for said determinable marginal subset ($S_{mar}$) from said plurality of marginal subsets ($S_{mar}^{'j}$) until a convergence criterion is fulfilled.

6.  Computer program product to be loaded by a system (8) according to claim 5 for computing at least one marginal probability for an observed phenomenon in a probability model which describes probabilities for relationships between said phenomenon and physical parameters, said system (8) comprising processing unit (21), memory (18, 19, 22, 23, 24), said processing unit (21) being connected to said memory (18, 19, 22, 23, 24), **characterised in that** said computer program product after being loaded allows said processing unit (21) to carry out:
    calculation of said upper bound ($p_+(S_{mar})$) and said lower bound ($p_-(S_{mar})$) by an iterative linear programming formalism, said calculation being consecutively repeated while varying a choice for said determinable marginal subset ($S_{mar}$) from said plurality of marginal subsets ($S_{mar}^{'j}$) until a convergence criterion is fulfilled.

7.  A data carrier with a computer program product as claimed in claim 6.

Fig 1  Fig 2  Fig 3  Fig 4

Fig 5

Fig 6

# Fig 7

**European Patent Office**

**DECLARATION**

which under Rule 45 of the European Patent Convention EP 03 07 6173 shall be considered, for the purposes of subsequent proceedings, as the European search report

**Application Number**

| The Search Division considers that the present application, does not comply with the provisions of the EPC to such an extent that it is not possible to carry out a meaningful search into the state of the art on the basis of all claims<br><br>Reason: | CLASSIFICATION OF THE APPLICATION (Int.Cl.7)<br><br>G06F17/10<br>G06N7/00 |
|---|---|
| The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.<br><br>The applicant's attention is drawn to the fact that a search may be carried out during examination following a declaration of no search under Rule 45 EPC, should the problems which led to the declaration being issued be overcome (see EPC Guideline C-VI, 8.5).<br><br>----- | |

| Place of search | Date | Examiner |
|---|---|---|
| The Hague | 19 March 2004 | Kingma, Y |

EPO FORM 1504 (P04C37)